(19) Europäisches Patentamt
European Patent Office
Office européen des brevets

(11) Publication number: **0 114 904**
**B1**

(12) # EUROPEAN PATENT SPECIFICATION

(45) Date of publication of patent specification: **19.11.87**

(51) Int. Cl.$^4$: **C 08 K 5/51**, C 08 L 23/08

(21) Application number: **83100683.8**

(22) Date of filing: **26.01.83**

(54) **Stabilized carboxyl-containing ethylene interpolymers.**

(43) Date of publication of application:
**08.08.84 Bulletin 84/32**

(45) Publication of the grant of the patent:
**19.11.87 Bulletin 87/47**

(84) Designated Contracting States:
**BE DE FR GB IT NL**

(58) References cited:
**US-A-3 467 733**
**US-A-3 484 506**
**US-A-4 254 014**

(73) Proprietor: **THE DOW CHEMICAL COMPANY**
**2030 Dow Center Abbott Road P.O. Box 1967**
**Midland, MI 48640 (US)**

(72) Inventor: **McKinney, Osborne Kelly**
**130 Oleander**
**Lake Jackson Texas (US)**
Inventor: **Perez Flores, David**
**1020 Oleander**
**Lake Jackson Texas (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 114 904 B1

Courier Press, Leamington Spa, England.

**Description**

A method for improving the thermal stability of polymers like vinyl resins, PVC, rubbers, Polycarbonates by incorporating into the polymer a minor amount of a bisphenol bisphosphite or a mono- or bis(1,3,2-dioxaphosphorinanyl-2-oxy)arylalkane is known from US—A—3,484,506, US—A—3,467,733 and US—A—4,254,014. Whereas US—A—4,254,014 discloses 2,2'-[-(1-methylethylidene)bis(4,1-phenyleneoxy-2,1-ethanediyloxy)]bis(5,5-dimethyl-1,3,2-dioxaphosphorinane as a suitable compound, the other references do not describe the incorporation of the specific phosphites or phosphorinanes according to this invention and do not mention any combination with other stabilizers.

Interpolymers of ethylene containing pendent carboxyl groups are highly susceptible to thermal oxidation. This inherent instability results in significantly reduced production rates due to oxidative gels (crosslinked polymer), polymer discoloration, and degradation by-products which can corrode process equipment. This instability also seriously limits the useful life of such polymer products as films, coatings, and adhesives.

It is the object of this invention to provide a method for improving thermal stability of carboxyl-containing ethylene interpolymers and to provide compositions obtained by said method.

The objects are solved by a method as to claim 1 and a composition as to claim 4. The other claims refer to preferred embodiments.

The thermal stability of carboxyl-containing ethylene interpolymers is synergistically improved by incorporating minor amounts of a biphenylene phosphorous compound with a hindered phenolic antioxidant and/or a dicarboxylic acid.

Ethylene interpolymers containing carboxyl groups are well known, especially interpolymers containing ethylene and olefinically unsaturated carboxylic acids, e.g., acrylic acid or methacrylic acid, such as shown in U.S. 3,239,370 and U.S. 3,520,861. The ethylene/acid interpolymers often contain relatively minor amounts of other polymerizable olefins, such as propylene, butene, hexene and octene.

Other ethylene polymers containing carboxyl groups are known, such as those prepared by grafting unsaturated carboxylic acids onto ethylene polymer chains.

Suitable monomers for use in incorporating carboxyl groups into ethylene polymers are, e.g., acrylic acid, methacrylic acid, crotonic acid, methyl methacrylic acid, alkyl acrylates, and vinyl acetate. The carboxylic groups may be provided by monomers of the formula

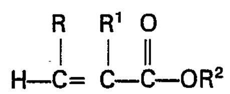

(I)

where R and $R^1$ are, independently, hydrogen or methyl groups and $R^2$ is hydrogen or alkyl groups of 1—10 carbon atoms. Other carboxylates are provided by monomers of the formula:

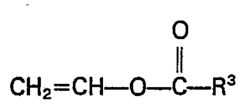

(II)

where $R^3$ is an alkyl group of preferably 1—4 carbon atoms. One or more of such carboxyl containing monomers may be used to provide about 0.01 to 60% by weight of the ethylene polymer. The carboxyl-containing polymers may exhibit melt flows of from 0.01 gm/10 min as measured by ASTM-D-1238, Condition E, to 500 gm/10 min as measured by ASTM-D-1238, condition B; i.e., they range from very high mol. wt to very low mol. wt.

The dicarboxylic acid additives of the present invention have the formula:

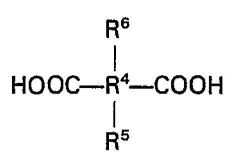

(III)

where $R^4$ represents an aliphatic (from a direct bond to $C_{24}$) or aromatic radical; $R^5$ and $R^6$ each independently, represent amino, mercapto, phosphato, carboxyl, or hydroxyl groups or other nucleophilic groups or hydrogen groups. Where $R^4$ is $C_0$, then the compound is HOOC—COOH and there are no $R^5$ and $R^6$ groups. Where $R^4$ is from $C_1$ to $C_{24}$ there may be only one $R^5$ and/or only one $R^6$ or there may be a plurality of $R^5$ and/or $R^6$ groups other than hydrogen. Where R is $C_2$ to $C_{24}$ there may be one or more double-bonds in the carbon chain. The following list of dicarboxylic acids is representative of the compounds contemplated within this invention.

| Name | Formula |
|---|---|
| oxalic | $HOOC-COOH$ |
| malonic | $HOOC-CH_2-COOH$ |
| succinic | $HOOC-CH_2-CH_2-COOH$ |
| tartaric | $HOOC-CH(OH)-CH(OH)-COOH$ |
| glutaric | $HOOC-(CH_2)_3-COOH$ |
| adipic | $HOOC-(CH_2)_4-COOH$ |
| pimelic | $HOOC-(CH_2)_5-COOH$ |
| suberic | $HOOC-(CH_2)_6-COOH$ |
| azelaic | $HOOC-(CH_2)_7-COOH$ |
| sebacic | $HOOC-(CH_2)_8-COOH$ |
| maleic | $HOOC-CH=CH-COOH$ |
| acetone dicarboxylic | $HOOC-CH_2-CO-CH_2-COOH$ |
| malic | $HOOC-CHOH-CH_2-COOH$ |
| phthalic | 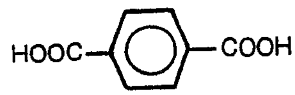 |

Other substituted or unsubstituted bis-dicarboxylic polymethylenes will become apparent to practitioners of the relevant arts.

The biphenylene phosphorous compounds for use in the present invention conform, generally, to the following structure,

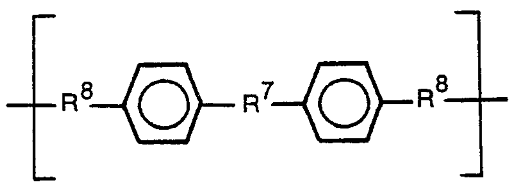

(IV)

where $R^7$ represents $C_0$ or $C_1$ to $C_4$ and $C_1$ to $C_4$ can be substituted or unsubstituted, including $=C(CH_3)_2$, $R^8$ represents a direct bond or $C_1$ to $C_{14}$, radical phenylene, or $-O-R^9-O-$ where $R^9$ is an aliphatic or aromatic radical; and where IV can be terminated by

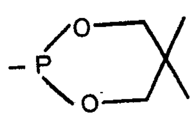

(V)

to form a bicyclic compound, or by

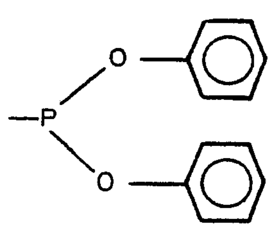

(VI)

to form a bis acyclic compound, where, in (V) and (VI)P represents phosphorous, P=O, or P=S; the phenyl rings of (VI) may be substituted or unsubstituted.

Some representative compounds are:

(a) 2,2'-bis(2-(5,5-dimethyl-1,3,2-dioxaphosphorinanyl)-oxy-2,1-ethanediyloxy-4,1-phenylene)propane;

(b) 2,2'-bis(2-(5,5-dimethyl-1,3,2-dioxaphosphorinanyl-2-oxide)-oxy-2,1-ethanediyloxy-4,1-phenylene)-propane;

(c) 2,2'-bis(2-(5,5-dimethyl-1,3,2-dioxaphosphorinanyl-2-sulfide)-oxy-2,1-ethanediyloxy-4,1-phenylene)propane;

(d) 2,2'-bis(2-(5,5-dimethyl-1,3,2-dioxaphosphorinanyl)-oxy-(1-methyl-2,1-ethanediyloxy)-4,1-phenylene)propane; and

(e) tetrakis (2,4-di-*tert*-butyl phenyl)4,4'-biphenylene diphosphonite.

U.S. Patent 4,254,014 discloses preparation of various biphenylene phosphorous compounds, e.g., aromatic bis(dioxaphosphorinanes) and discloses the use of such compounds as additives to polycarbonates.

The hindered phenols for use in the present invention generally have structures illustrated by, for example,

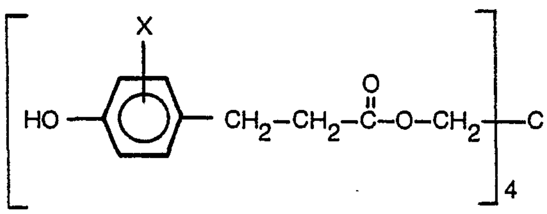

(VII)

or by

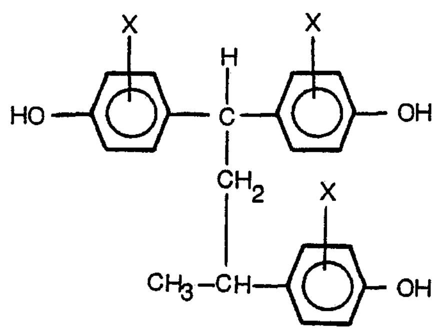

(VIII)

where X represents one or more pendant groups, such as

(a) 1,3,5-trimethyl-2,4,6-tris(3',5'-di-*tert*-butyl-4'-hydroxybenzyl)benzene;

(b) 2,2'-oxamidobisethyl-3(3',5'-di-*tert*-butyl-4-hydroxy-phenyl) propionate;

(c) tetrakis [methylene-3-(3',5'-di-*tert*-butyl-4'-hydroxy-phenyl)propionate]methane;

(d) 1,1,3-tris-(2'-methyl-4'-hydroxy-5'-*tert*-butylphenyl)butane;

(e) 2,6-di-*tert*-butyl-4-ethylphenol;

(f) tris (4-*tert*-butyl-3-hydroxy-2,6-dimethylbenzyl)-2-triazine-2,4,6-(1H,3H,5H)trione;

(g) 2,6-di-*tert*-butyl-4-methylphenol; or

(h) octadecyl-3,4-di-*tert*-butyl-4-hydroxy-hydrocinnamate.

Suggested operative ranges and preferred ranges (percent by wt.) for the components of the present blends or alloys are as follows:

| Component | Operative | Preferred |
|---|---|---|
| carboxyl-containing polymer | 79—99.9 | 99.7—99.8 |
| hindered phenol | 0.01—3.0 | 0.02—0.1 |
| biphenylene P compound | 0.01—3.0 | 0.02—0.1 |
| dicarboxylic acid | 0.01—15 | 0.02—0.1 |

The mixing of the interpolymers with the other components of the present invention may be done by any convenient means, such as by employing a compounding extruder, Banbury mixer, intensive mixers, or multi-screw mixing extruder, or any combination thereof, preferably by masterbatch concentrates

letdown to the desired additive concentrations in an extruder equipped with one or more mixing screws. Usually, one seeks to distribute additives substantially uniformly through the base resin.

The Oxidative Induction Period is measured by an oxygen-uptake apparatus similar to that described by Grieveson in Society of Chemical Industries, Monograph No 13, 1961, pp. 413—431, published in London, England, and the Gardner Yellowness Index is measured by a Gardner® XL-23 colorimeter according to ASTM-D-1925.

The following examples are for illustration of various embodiments.

Example 1

An ethylene/acrylic acid copolymer prepared by free-radical initiation in a stirred autoclave under high ethylene pressure and high temperature was used. The copolymer contained 6.5% by weight of acrylic acid units and had a melt flow of 2 gm/10 minutes as measured by ASTM-D-1238 condition E. Small particles of the copolymer were dry-blended with 0.25% tartaric acid and then compounded at 350°F (~177°C) on a 6.35 cm (2.5 inch), 20/1 L/D compounding extruder equipped with a metering, compression and mixing section. The pelletized product had an oxidative induction period of >60 minutes according to oxygen-uptake analysis at ~149°C. The oxidative induction period at ~149°C for the base resin without the addition of tartaric acid was 9.0 minutes.

Examples 2

An ethylene/acrylic acid copolymer containing 6.5% acrylic acid by weight, a melt flow of 2 gm/10 min., and a density of 0.9325 gm/$cm^3$ was used as the base resin in the following evaluations:

| Run | Stabilizer* | Concentration, ppm | Oxidative Induction Period @ 177°C, minutes |
|---|---|---|---|
| 1 | None | — | 3.5 |
| 2 | A | 2500 | 15.0 |
| 3 | B | 2500 | 11.0 |

* A is tartaric acid
B is a 2:1 physical blend of 1,1,3-tris(2'-methyl-4'-hydroxy-5'-*tert*-butyl phenyl)butane and distearylthiodipropionate (a thioester stabilizer).

The above evaluation indicated that at an equivalent concentration, tartaric acid out-performed a conventional hindered phenol-thioester composition.

Example 3

An ethylene/acrylic acid copolymer containing 6.5% acrylic acid, having a melt flow of 5.5 gm/10 min and a density of 0.9325 gm/cc was used in the following evaluation.

| Run | Additive A* ppm | Additive B** ppm | Oxidative Induction Period @ 177°C, mins |
|---|---|---|---|
| 1 | None | None | 7.0 |
| 2 | 1000 | None | 21.0 |
| 3 | None | 1000 | 39.0 |
| 4 | 500 | 500 | 48.0 |

*A is 1,1,3-tris-(2'-methyl-4-hydroxyl-5'-*tert*-butyl phenyl) butane
**B is tartaric acid.

The above evaluation indicated that a hindered phenol-dicarboxylic acid composition is highly synergistic.

Example 4

Using the same copolymer as in Example 3, the following evaluation was performed:

| Run | Additive A* ppm | Additive B** ppm | Oxidative Induction Period @ 177°C, mins |
|---|---|---|---|
| 1 | None | None | 7.0 |
| 2 | 1000 | None | 21.0 |
| 3 | None | 1000 | 35.0 |
| 4 | 500 | 500 | 78.0 |

* Additive A is 1,1,3-tris-(2'-methyl-4-hydroxyl-5'-*tert*-butyl phenyl)butane.
** Additive B is 2,2'-bis(2-(5,5-dimethyl-1,3,2-dioxaphosphorinanyl)-oxy-2,1-ethanediyloxy-4,1-phenylene)-propane.

This evaluation showed that a hindered phenolbiphenylene phosphorous composition is also highly synergistic.

Example 5

Using the same copolymer as in Example 3 the following evaluation was conducted.

| Run | Stabilizer* | Concentration ppm | Oxidative Induction Period @ 177°C, mins |
|---|---|---|---|
| 1 | A | 1000 | 23.0 |
| 2 | B | 1000 | 39.0 |
| 3 | C | 1000 | 21.0 |
| 4 | D | 1000 | 35.0 |
| 5 | E | 1000 | >143.0 |
| 6 | — | — | 7.0 |

*A is tetrakis [methylene 3-[3',5'-di-*tert*-butyl-4'-hydroxyl phenyl)propionate]methane
B is tartaric acid
C is 1,1,3-tris-(2'-methyl-4-hydroxyl-5'-*tert*-butylphenyl)butane
D is 2,2'-bis(2-(5,5-dimethyl-1,3,2-dioxaphosphorinanyl)-oxy-2,1-ethanediyloxy-4,1-phenylene)propane;
E is tetrakis (2,4-di-*tert*-butylphenyl)4,4'-biphenylene disphosphonite.

The above evaluation showed that at equivalent concentrations the dicarboxylic acid and the biphenylene phosphorous compound were more effective thermal stabilizers than either of the conventional hindered phenol stabilizers.

Example 6

Using the same copolymer as in Example 3 the following multiple-extrusion evaluation was performed.

| Run | Stabilizer** A, ppm | Other Stabilizer Identity | Other Stabilizer ppm | $\sigma_{mi}$* | $\Sigma_{mi}$* |
|---|---|---|---|---|---|
| 1 | None | None | None | 0.147 | — |
| 2 | 500 | B | 500 | 0.087 | 41.06 |
| 3 | 500 | C | 500 | 0.097 | 34.33 |
| 4 | 500 | D | 500 | 0.137 | 7.08 |
| 5 | 500 | E | 500 | 0.176 | −19.67 |

*$\sigma_{mi}$ is the standard deviation in melt indices of each sample extruded five times at 204°C on the aforementioned extruder. $\Sigma_{mi}$ is the percent melt stability relative to the base resin in this evaluation and was calculated from:

$$\Sigma_{mi} \frac{\sigma_0 - \sigma_I}{\sigma_0} \times 100$$

where $\sigma_0$ was the $\sigma_{mi}$ of the unstabilized base resin and $\sigma_I$ was the $\sigma_{mi}$ of each stabilized sample independently.

**A is tetrakis [methylene 3-[3′,5′-di-*tert*-butyl-4′-hydroxylphenyl)propionate]methane
B is 2,2′-bis(2-(5,5-dimethyl-1,3,2-dioxaphosphorinanyl)-oxy-2,1-ethanediyloxy-4,1-phenylene)propane;
C is tartaric acid
D is tris-(mixed mono- and dinonyl phenyl)phosphite
E is thiobis (6-*tert*-butyl-3-methyl phenol).

The above multiple-extrusion evaluation indicated that phenolic/biphenylene phosphorous and phenolic/dicarboxylic acid compositions offer exceptional process stability in contrast to conventional phosphite and thio-bisphenol compositions which offer little or no stability, or may even adversely affect polymer stability.

Example 7

In this evaluation an ethylene/acrylic acid copolymer containing 6.5% by wt. acrylic acid, having a melt flow of 9.0 gm/10 min and a density of 0.9325 gm/cc was used.

| Run | Stabilizer* | Conc. ppm | $\Sigma_{mi}$ |
|---|---|---|---|
| 1 | None | None | — |
| 2 | A | 1000 | 16.2 |
| 3 | B | 1000 | 72.5 |
| 4 | C | 1000 | 43.8 |

*A is tetrakis [methylene 3-[3′,5′-di-*tert*-butyl-4′-hydroxylphenyl)propionate]methane
B is 2,2′-bis(2-(5,5-dimethyl-1,3,2-dioxaphosphorinanyl)-oxy-2,1-ethanediyloxy-4,1-phenylene)propane;
C is tartaric acid

The above evaluation showed that at equivalent concentrations the dicarboxylic acid and the biphenylene phosphorous compound were significantly more effective process stabilizers than the conventional hindered phenol.

Example 8

Following the multiple-extrusion evaluations of Example 6 above, Gardner Yellowness Index determinations of the samples were made according to ASTM-D-1925.

| Run | A, ppm | Stabilizer* B, ppm | C, ppm | D, ppm | Gardner Yellowness Index, Pass: 0 | 1 | 2 | 3 | 4 |
|---|---|---|---|---|---|---|---|---|---|
| 1 | 1000 | — | — | — | −3.4 | 6.2 | 6.4 | 8.97 | 11.7 |
| 2 | 500 | — | 500 | — | −3.4 | −2.8 | −1.2 | 0.54 | 4.03 |
| 3 | 500 | 500 | — | — | −2.06 | −0.85 | 0.75 | 1.88 | 3.34 |
| 4 | 500 | — | — | 500 | −0.90 | −0.25 | 0.50 | 1.56 | 3.07 |

* Stabilizers A, B and C are same as in Example 6. Stabilizer D is same as E in Example 5.

This evaluation showed that the dicarboxylic acid and the biphenylene phosphorous compositions imparted good color stability to an ethylene/acrylic acid copolymer while a conventional hindered phenol stabilizer imparted less than acceptable color stability as denoted by the relatively high measurement, 11.7; the higher the value the more objectionable the color.

Example 9

Using the same base resin as in Example 7 above the following evaluation was made.

| | | Stabilizer* | | |
|---|---|---|---|---|
| Run | A, ppm | B, ppm | C, ppm | $\Sigma_{ml}$ |
| 1 | 500 | 500 | — | 30.8 |
| 2 | 500 | 250 | 250 | 72.2 |

*A is 1,1,3-tris-(2′-methyl-4-hydroxyl-5′-*tert*-butylphenyl)butane.
B is tetrakis (2,4-di-*tert*-butylphenyl)4,4′-biphenylene diphosphonite.
C is 2,2′-bis(2-(5,5-dimethyl-1,3,2-dioxaphosphorinanyl)-oxy-2,1-ethanediyloxy-4,1-phenylene)propane;

This evaluation showed that the combination of two biphenylene phosphorous compounds and a hindered phenolic antioxidant was very effective.

Example 10

Using the same base resin as in Example 7 above the following evaluation was made:

| | | Stabilizer* | | |
|---|---|---|---|---|
| Run | A, ppm | B, ppm | C, ppm | $\Sigma_{ml}$ |
| 1 | 500 | 500 | — | 30.8 |
| 2 | 500 | 250 | 250 | 58.1 |
| 3 | — | 1000 | — | 19.1 |
| 4 | 1000 | — | — | 16.1 |

*A is 1,1,3-tris-(2′-methyl-4-hydroxyl-5′-*tert*-butylphenyl)butane.
B is tetrakis (2,4-di-*tert*-butylphenyl)4,4′-biphenylene diphosphonite.
C is tartaric acid.

This evaluation showed that the combination of dicarboylic acid, a biphenylene phosphorous compound, and a hindered phenol antioxidant significantly improved the process stability of a carboxyl-containing ethylene interpolymer. The evaluation also illustrated another synergistic biphenylene phosphorous/hindered phenol composition.

Within the purview of the present invention, dicarboxylic acids and biphenylene phosphorous compositions, such as described herein, significantly improve the thermal-oxidative and color stability of carboxyl-containing ethylene interpolymers during their manufacturing processes, storage, fabrication, and end-usage. The applications of such heat stable ethylene interpolymers include such things as extrusion films (e.g. for paper, paperboard, metallic substrates, etc.), blister packages, flexible packages, adhesives (hot melts), primers, binders, laminates, adhesive composite structures, barrier films, metallized films, injection molded articles, rotomolded articles, wire and cable insulation, shielding tapes, and powder molding, including those embodiments wherein the polymers contain colorants, pigments, or fillers. Fillers include such things as silica, calcium cabonate, metal oxides, talc, clay, sawdust, rice hulls, wood flour, starch, and ground bark.

**Claims**

1. A method for improving the thermal stability of carboxyl-containing ethylene interpolymers characterized by incorporating into said interpolymers 0.01 percent to 3 percent of at least one biphenylene phosphorous compound having two terminating groups of the general formula

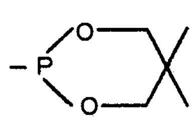

(V)

or

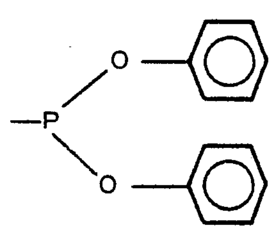

(VI)

where the phenyl rings of (VI) may be substituted or unsubstituted, where the biphenylene radical conforms generally to the formula

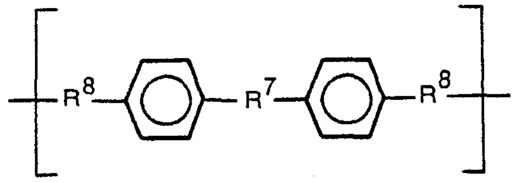

(IV)

where $R^7$ represents a direct bond or a $C_1$ to $C_4$ radical, which $C_1$ to $C_4$ radical can be substituted or unsubstituted including $=C(CH_3)_2$; $R^8$ represents a direct bond or a $C_1$ to $C_{14}$ radical, or phenylene, or $—O—R^9—O—$ where $R^9$ is an aliphatic or aromatic group, P in the terminating groups (V) and (VI) may also represent P=O or P=S, there is also incorporated into said interpolymer at least one hindered phenolic antioxidant in an amount of 0.01 percent to 3 percent by weight and/or a dicarboxylic acid having the formula

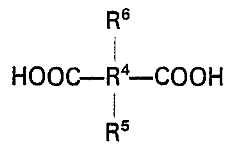

(III)

where $R^4$ represents a direct bond without $R^5$ and $R^6$ or an aliphatic or aromatic grouping containing $C_1$ to $C_{24}$, $R^5$ and $R^6$ each, independently, represent amino, mercapto, phosphato, carboxyl, hydroxyl, or other nucleophilic groups or hydrogen, in an amount of 0.01 percent to 15 percent by weight.

2. The method of claim 1, characterized in that the dicarboxylic acid is tartaric acid.

3. The methods of claims 1 or 2, characterized in that the hindered phenolic antioxidant comprises at least one compound having the formula

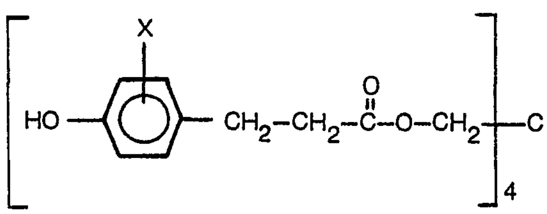

(VII)

or the formula

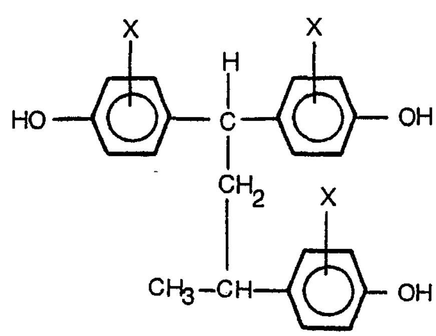

(VIII)

where X represents one or more pendant groups.

4. A composition of matter comprising a carboxyl-containing ethylene interpolymer having incorporated at least one biphenylene phosphorous compound and at least one hindered phenolic antioxidant and/or a dicarboxylic acid obtainable by the method of claim 1.

5. A composition of claim 4, characterized in that the interpolymer is an ethylene-acrylic acid copolymer.

**Patentansprüche**

1. Verfahren zum Verbessern der thermischen Stabilität von Carboxylgruppen enthaltenden Ethylenmischpolymeren, gekennzeichnet durch Einbringen von 0,01 bis 3% mindestens einer Diphenylenphosphorverbindung in die Mischpolymeren, die zwei Endgruppen der allgemeinen Formel:

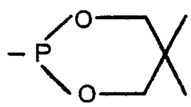 (V) oder 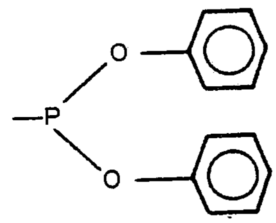 (VI)

aufweist, wobei die Phenylringe von (VI) substituiert oder unsubstituiert sein können, wobei die Biphenylengruppen im allgemeinen die Formel

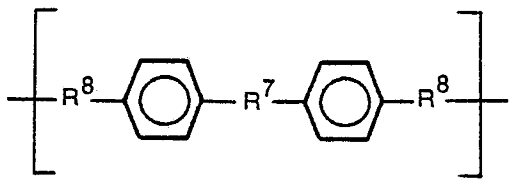 (IV)

aufweisen, in der $R^7$ eine direkte Bindung oder eine $C_1$ bis $C_4$-Gruppe ist und die $C_1$ bis $C_4$-Gruppe substituiert oder unsubstituiert sein kann, einschließlich $=C(CH_3)_2$, $R^8$ eine direkte Bindung oder eine $C_1$ bis $C_{14}$-Gruppe oder Phenylen oder —O—$R^9$—O— ist, in der $R^9$ eine aliphatische oder aromatische Gruppe ist, P in den Endgruppen (V) und (VI) auch P=O oder P=S sein kann, und das Mischpolymere noch mindestens ein sterisch gehindertes phenolisches Antioxidans in einer Menge von 0.01 bis 3 Gew.% und/oder eine Dicarbonsäure der Formel:

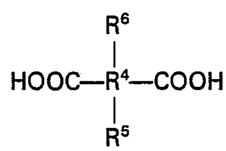 (III)

in der $R^4$ eine direkte Bindung ohne $R^5$ und $R^6$ oder eine aliphatische oder aromatische Gruppe mit $C_1$ bis $C_{24}$ ist, $R^5$ und $R^6$ jeweils unabhängig Amino-, Mercapto-, Phosphato-, Carboxyl-, Hydroxyl-, oder andere nukleophile Gruppen oder Wasserstoff sind in einer Menge von 0.01% bis 15 Gew.%, enthält.

2. Verfahren nach Anspruch 1, dadurch gekennzeichnet, daß die Dicarbonsäure Weinsäure ist.

3. Verfahren nach Ansprüchen 1 oder 2, dadurch gekennzeichnet, daß das sterisch gehinderte phenolische Antioxidans mindestens eine Verbindung der Formel:

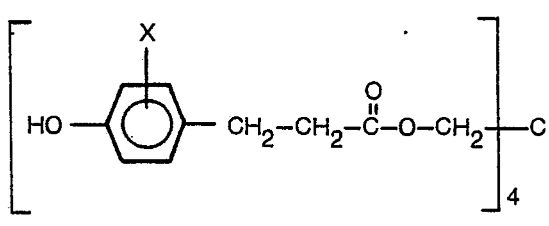 (VII)

oder der Formeln:

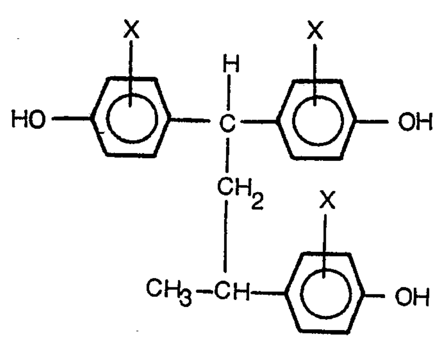 (VIII)

in denen X eine oder mehrere anhängende Gruppen darstellt, enthält.

4. Zusammensetzung enthaltend ein Carboxylgruppen enthaltendes Ethylenmischpolymer, das mindestens eine Biphenylenphosphorverbindung und mindestens ein sterisch gehindertes phenolisches Antioxidans und/oder eine Dicarbonsäure und nach dem Verfahren von Anspruch 1 erhältlich ist, enthält.

5. Zusammensetzung nach Anspruch 4, dadurch gekennzeichnet, daß das Mischpolymer ein Ethylen-Acrylsäurecopolymer ist.

**Revendications**

1. Procédé pour le perfectionnement de la stabilité thermique des interpolymères d'éthylène contenant des groupes carboxyle, caractérisé par l'incorporation, dans lesdits interpolymères, de 0,01 pour-cent à 3 pour-cent d'au moins un composé phospho-biphénylène ayant deux groupes de terminaison de formule générale

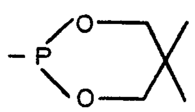 (V) ou 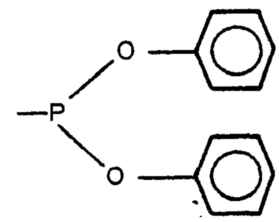 (VI)

dans laquelle les noyaux phényle de (VI) peuvent être substitués ou non substitués, dans lequel le radical biphénylène correspond généralement à la formule

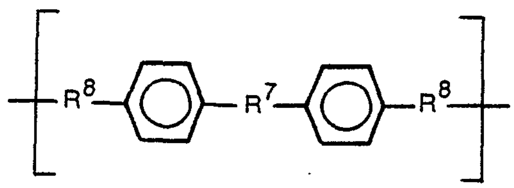 (IV)

dans laquelle $R^7$ représente une liaison directe ou un radical en $C_1$ à $C_4$, ce radical en $C_1$ à $C_4$ pouvant être substitué ou non substitué, y compris $=C(CH_3)_2$; $R^8$ représente une liaison directe ou un radical de $C_1$ à $C_{14}$, ou le radical phénylène, ou —O—$R^9$—O— où $R^9$ est un groupe aliphatique ou aromatique, P dans les groupes (V) et (VI) de terminaison peut également représenter P=O ou P=S, avec également l'incorporation dans ledit interpolymère d'au moins un antioxydant phénolique stériquement encombré, en une quantité de 0,01 pour-cent à 3 pour-cent en poids, et/ou d'un acide dicarboxylique ayant la formule

$R^6$
|
HOOC—$R^4$—COOH (III)
|
$R^5$

dans laquelle $R^4$ représente une liaison directe sans $R^5$ et $R^6$ ou un groupe aliphatique ou aromatique en $C_1$ à $C_{24}$, $R^5$ et $R^6$ représentent chacun indépendamment un groupe amino, mercapto, phosphato, carboxyle, hydroxyle ou d'autres groupes nucléophiles ou un atome d'hydrogène, en une quantité de 0,01 pour-cent à 15 pour-cent en poids.

2. Procédé selon la revendication 1, caractérisé en ce que l'acide dicarboxylique est l'acide tartrique.

3. Procédé selon la revendication 1 ou 2, caractérisé en ce que l'antioxydant phénolique stériquement encombré comprend au moins un composé ayant la formule

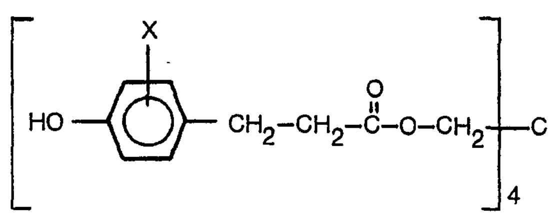 (VII)

ou la formule

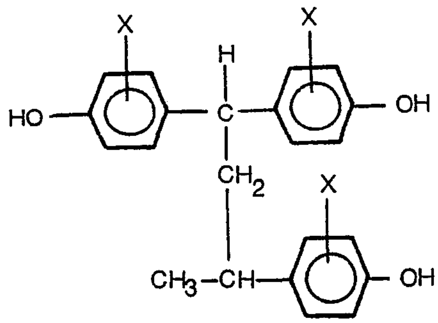

(VIII)

où X représente ou un plusieurs groupes accrochés.

4. Composition de matière comprenant un interpolymère d'éthylène contenant des groupes carboxyle, dans lequel est incorporé au moins un composé phospho — biphénylène et au moins un antioxydant phénolique stériquement encombré et/ou un acide dicarboxylique, que l'on peut obtenir par le procédé selon la revendication 1.

5. Composition selon la revendication 4, caractérisée en ce que l'interpolymère est un copolymère éthylène-acide acrylique.